# EUROPÄISCHE PATENTSCHRIFT

(11) **EP 0 730 533 B1**
(45) Veröffentlichungstag und Bekanntmachung des Hinweises auf die Patenterteilung: **02.02.2000**
(21) Anmeldenummer: 95933223.0
(22) Anmeldetag: 05.10.1995
(51) Int. Cl.: B60B 1/00, B60B 9/12

(54) **LAUFRAD SOWIE VERFAHREN ZU SEINER HERSTELLUNG**
IMPELLER AND METHOD OF PRODUCING THE SAME
ROUE A AUBES ET SON PROCEDE DE FABRICATION

(30) Priorität: 05.10.1994 AT 189594
(43) Veröffentlichungstag der Anmeldung: 11.09.1996
(73) Patentinhaber: SPENGLE HOCHLEISTUNGSKUNSTSTOFFTECHNIK GESELLSCHAFT M.B.H., A-8504 Preding 236 (AT)
(72) Erfinder: BRAUCHART, Erwin, A-8010 Graz (AT)
(74) Vertreter: Haffner, Thomas M., Dr.
(86) Internationale Anmeldenummer: AT9500194
(87) Internationale Veröffentlichungsnummer: WO9611119

(56) Entgegenhaltungen:
- EP-A- 0 368 480
- WO-A-95/04666
- WO-A-95/10424
- CH-A- 98 209
- FR-A- 2 701 899
- FR-A- 2 702 707
- GB-A- 819 584
- GB-A- 1 549 611

## Beschreibung

Die Erfindung bezieht sich auf ein Laufrad, insbesondere für ein Fahrrad, mit einer Felge und einem Felgentragkörper, wobei die Felge in Umfangsrichtung verdrehsicher mit dem Felgentragkörper verbunden ist und zwischen Felgentragkörper und Felge in radialer Richtung federnde Stützelemente, wie z.B. Elastomerteile, angeordnet sind.

Aus der CH 98 209 ist eine elastische Radbereifung bekanntgeworden, welche eine Federung von einem mit einer Vollgummibereifung ausgestatteten Wagen ermöglichen soll. Bei dieser elastischen Radbereifung sind zwischen einer Felge eines Radkörpers und einem Außenring, auf welchem ein Vollgummireifen angebracht ist, elastische Körper eingesetzt, welche durch auf der Felge angebrachte Rahmen bzw. am Außenring montierten Winkeleisen gehalten werden.

Aus der EP-A1-368 480 ist ein Laufrad bekannt geworden, bei welchem ein Mehrspeichentragkörper aus einer Schaumstruktur vorliegt, welche mit faserverstärktem Kunststoff beschichtet ist. Bei dieser bekannten Ausbildung wird ein Aluminiumfelgenring mit im wesentlichen H-förmigem Profilquerschnitt ebenso wie die Radnabe in einer Form positioniert, worauf die Tragstruktur durch Einspritzen von Polyurethan und Schäumen desselben gebildet wird. Bei der Herstellung soll somit der Schaum expandieren und hiebei eine sichere Verbindung zwischen dem Aluminiumfelgenring und dem Tragkörper ebenso wie eine sichere Verbindung zwischen Nabe und Tragkörper gewährleisten. Insbesondere seit der Entwicklung hochfester Kunststoffe, wie beispielsweise karbonfaserverstärkter Kunststoffe, ist es bekannt geworden, Laufräder der eingangs genannten Art weitestgehend aus derartigen leichten und hochstabilen Kunststoffen herzustellen. Bei der Herstellung von zur Gänze aus derartigen Kunststoffen bestehenden Laufrädern besteht jedoch zumeist nicht mehr die Möglichkeit, eine bekannte Felgenbremse ohne zusätzliche Maßnahmen zu verwenden. Die Reibeigenschaften derartiger Materialien erlauben in der Regel nicht die Verwendung von auf dem Friktionsprinzip basierenden Felgenbremsen. Wenn, wie bereits in der EP-A1-368 480 vorgeschlagen, ein Aluminiumfelgenring und ein von einem derartigen Felgenring gesonderter Felgentragkörper Verwendung findet, werden die miteinander verbundenen Bauteile in Betrieb unterschiedlich erwärmt und sind unterschiedlichen Wärmeausdehnungen unterworfen. Bei Bremsvorgängen können Felgen auf Temperaturen von etwa 150°C erwärmt werden, wobei die dadurch bedingte thermische Ausdehnung des Felgenringes zu einem unrunden Radlauf führt. Neben störenden Ausdehnungs- und Schrumpfgeräuschen hat ein derartiger unrunder Lauf einen wesentlich höheren Verschleiß zur Folge und der Felgenring kann sich relativ zum Felgenkörper verschieben.

Da besonders leichte Werkstoffe für den Felgentragkörper zwar hervorragende Steifigkeits- und Festigkeitseigenschaften, dafür aber eine hohe Bruchanfälligkeit an ihren Kanten aufweisen, kann eine derartige Relativverschiebung von Felgenring zu Felgenkörper auch eine vorzeitige Zerstörung des Felgentragkörpers oder sogar der Bereifung zur Folge haben.

Die Erfindung zielt nun darauf ab, ein Laufrad der eingangs genannten Art zu schaffen, welches bei beliebigen Betriebstemperaturen einen runden Lauf gewährleistet und damit insgesamt einem geringeren Verschleiß unterworfen ist. Zur Lösung dieser Aufgabe besteht das erfindungsgemäße Laufrad im wesentlichen darin, daß die Felge aus Metall, insbesondere Aluminium, besteht und als elastisch aufweitbarer Profilring mit einer lösbaren Verschiießeinrichtung ausgebildet ist, wobei der Profilring ein im wesentlichen H-förmiges Profil aufweist und daß die Felge den Felgentragkörper unter Ausbildung eines Hohlraumes für die Aufnahme der radialen Stützelemente außen umgreift. Wenn ein derartiges Laufrad beispielsweise gebremst wird oder durch andere thermische Belastung auf höhere Temperatur erwärmt wird, erfolgt eine gleichmäßige Ausdehnung der Felge, welche gleichmäßig durch den Druck der federnden Stützelemente unterstützt ist, wodurch der Rundlauf weiter gewährleistet ist. Bei einer Erwärmung des Elastomers bzw. der federnden Stützelemente kann die Ausbildung hiebei so getroffen werden, daß die Federvorspannung unabhängig von der Betriebstemperatur im wesentlichen konstant bleibt, da das federnde Stützelement bei entsprechender Erwärmung der Ausdehnung des Felgenringes unter Aufrechterhaltung des Druckes folgt. Wenn umgekehrt die Felge erkaltet, schrumpft sie wiederum gleichmäßig in sich zusammen und preßt das federnde Stützelement bzw. den Elastomerteil in die entsprechende Ausgangslage. Dadurch, daß die Felge als elastisch aufweitbarer Profilring mit einer lösbaren Verschließeinrichtung ausgebildet ist, läßt sich ein besonders einfacher Zusammenbau eines derartigen Laufrades erreichen, wobei hier der Umstand, daß zwischen Felgentragkörper und Felge ein Hohlraum verbleibt, den Zusammenbau und die Anordnung beliebig ausgestalteter lösbarer Verschließeinrichtungen wesentlich erleichtert. So können beispielsweise an der Innenseite der Felgen hintergreifende Schließglieder oder Teile einer Verschließeinrichtung ohne Beeinträchtigung der Laufeigenschaften und ohne mechanische Überbeanspruchung im Hohlraum zwischen Felge und Felgentragkörper angeordnet sein, wobei die geforderte Zentrierung der Felge relativ zum Felgentragkörper durch die elastischen Stützelemente gewährleistet wird.

Während bei einer Erwärmung mit einer Ausdehnung der federnden Stützelemente der zur Verfügung stehende Hohlraum gleichfalls sicher überbrückt werden soll, führt die Tatsache, daß auch in erkaltetem Zustand, d.h. dann, wenn die Felge maximal auf den Tragkörper aufgeschrumpft ist, noch Hohlräume verbleiben, zu einer sicheren Zwangs lüftung bzw. Hinterlüftung des Felgenringes, wodurch insgesamt Betriebstemperaturen herabgesetzt werden können. Mit Vorteil ist die Ausbildung hiefür so getroffen, daß die radialen Stützelemente bei Umgebungstemperatur den Raum zwischen dem Umfang des Felgentragkörpers und der dem Umfang des Tragkörpers zugewandten Fläche der Felge unvollständig ausfüllen. Bei einer thermischen Belastung der Felgenringes bzw. der Felge folgt das federnde Stützelement einer thermischen Ausdechnung nur in demjenigen Maß, in welchem Wärme vom Felgenring bzw. der Felge aufgenommen und abgeleitet wird. Die entsprechende Hinterlüftung führt dazu, daß auch die federnden Stützelemente eine verbesserte Wärmeableitung ermöglichen, wodurch die Betriebstemperatur herabgesetzt wird.

In besonders einfacher Weise kann die Ausbildung so getroffen sein, daß der Felgentragkörper eine Umfangsnut für die Aufnahme der radialen Stützelemente aufweist. Die Stützelemente können aus einem geschlossenen Elastomerring oder offenen Segmenten gebildet sein, wobei in der Regel Unterbrechungen für das Ventil erforderlich sind. Eine derartige Umfangsnut erleichtert die Positionierung der Stützelemente und führt dazu, daß auch eine einfache Lagefixierung trotz thermischer Verschiebungen immer gewährleistet bleibt. Gleichzeitig stellt eine derartige Umfangsnut sicher, daß auch bei relativ kleindimensionierten Stützelementen über den gesamten Betriebstemperaturbereich eine sichere federnde Abstützung der Felge und bevorzugt eine Abstützung in der Mittelebene des Laufrades gewährleistet wird.

Um die thermische Belastung weiter herabzusetzen, kann mit Vorteil die Ausbildung so getroffen sein, daß der Hohlraum zwischen Felgentragkörper und Felge Belüftungsöffnungen aufweist. Mit Vorteil wird die elastische Verspannung der Stützelemente so gewählt, daß bei maximaler Erwärmung bzw. Wärmedehnung des Felgenprofils eine Stützkraft in radialer Richtung aufrecht erhalten bleibt, wobei dies durch Wahl entsprechender Materialien für die federnden Stützelement sichergestellt werden kann.

In besonders einfacher Weise ist die Ausbildung so getroffen, daß die Felge an ihren dem Tragkörper zugewandten Innenseiten der Schenkel des H-Profiles Vorsprünge für den Eingriff in Ringnuten an der Außenseite bzw. den Flanken des Umfanges des Felgentragkörpers aufweisen, wodurch der Zusammenbau weiter erleichtert wird.

Um die gewünschte Stützkraft auch bei den höchsten Betriebstemperaturen sicher zu erzielen, ist das erfindungsgemäße Verfahren zur Herstellung eines derartigen Laufrades im wesentlichen dadurch gekennzeichnet, daß die Felge auf ihre maximale Betriebstemperatur, insbesondere etwa 150° C, erwärmt wird und unter Zwischenschaltung der elastomeren Stützelemente mit dem Felgentragkörper verbunden wird. Auf diese Weise wird sichergestellt, daß bei einem Abkühlen der Felgen durch das Schrumpfen die Federvorspannung zumindest aufrecht erhalten wird, wenn sie nicht, beispielsweise aufgrund entsprechend geringerer Temperaturen des federnden Stützelementes beim Zusammenbau, durch das Aufschrumpfen noch zunimmt.

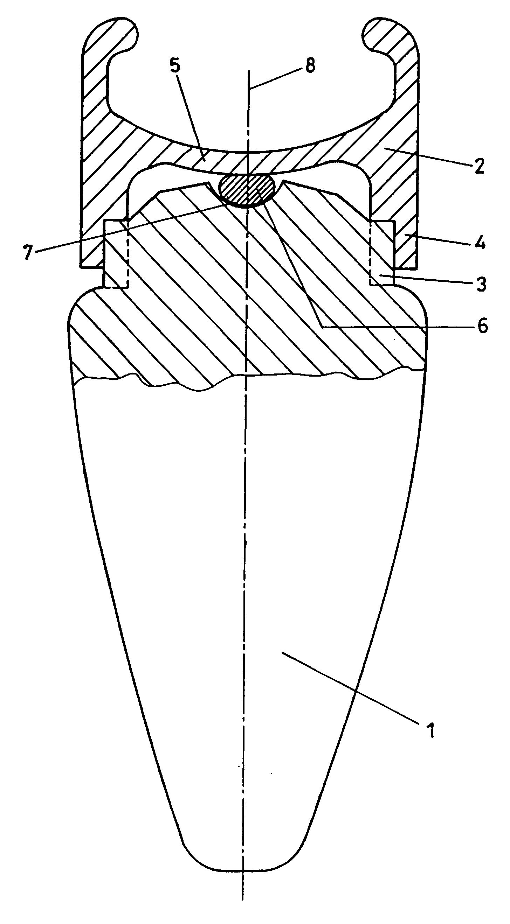

Die Erfindung wird nachfolgend anhand eines in der Zeichnung schematisch dargestellten Ausführungsbeispieles, nämlich einen Schnitt durch den äußeren Bereich eines Felgentragkörpers und einer Felge näher erläutert.

In der Zeichnung ist mit 1 der Felgentragkörper bezeichnet, wobei im einzelnen der Außenkranz des Felgentragkörpers 1 im Schnitt ersichtlich ist. Mit dem Felgentragkörper 1 ist eine Felge 2 verbunden, welche in entsprechend abgesetzte Bereiche 3 des Felgentragkörpers 1 mit ihren zum Felgentragkörper weisenden Schenkeln 4 des im wesentlichen H-förmigen Querschnittsprofiles eintaucht. Zwischen dem Steg bzw. Felgenbett 5 der Felge 2 und dem Tragkörper 1 ist ein federndes Stützelement 6 in Form eines Elastomerringes eingesetzt.

Beim Zusammenbau wird die Felge 2 entweder geöffnet und über den Felgentragkörper 1 unter Zwischenschaltung der federnden Stützelemente 6 und unter Verbindung der freien offenen Enden des Felgenringes 2 aufgesetzt. Alternativ kann, wie dies erfindungsgemäß vorgeschlagen wird, die Felge 2 auf maximale Betriebstemperatur erwärmt werden, worauf sie unter Kompression der federnden Stützelemente 6 auf den Felgentragkörper beim Abkühlen der Felge 2 aufschrumpft. Die federnden Stützelemente 6 sind hiebei in einer Umfangsnut 7 des Felgentragkörpers aufgenommen, sodaß bei beliebiger thermischer Belastung eine exakte Abstützung in der mit 8 angedeuteten radialen Hauptebene gewährleistet ist. Bei entsprechend hoher Federvorspannung der federnden Stützelemente kann auf eine seitliche Verankerung der Schenkel 4 an der Außenseite des Umfangs des Felgentragkörpers verzichtet werden. Wenn hier, wie nicht dargestellt, eine seitliche Verankerung beispielsweise durch Vorsprünge an den abwärtsragenden Schenkeln 4 und eine Umfangsnut bzw. Ausnehmung an den Flanken des Felgentragkörpers 1 gewünscht wird, müssen die thermischen Spannungen durch Durchbiegungen des Felgenbettes bzw. des Steges 5 aufgenommen werden.

## Patentansprüche

1. Laufrad, insbesondere für ein Fahrrad, mit einer Felge und einem Felgentragkörper, wobei die Felge in Umfangsrichtung verdrehsicher mit dem Felgentragkörper verbunden ist und zwischen Felgentragkörper (1) und Felge (2) in radialer Richtung federnde Stützelemente (6), wie z.B. Elastomerteile, angeordnet sind, dadurch gekennzeichnet, daß die Felge (2) aus Metall, insbesondere Aluminium, besteht und als elastisch aufweitbarer Profilring (2) mit einer lösbaren Verschließeinrichtung ausgebildet ist, wobei der Profilring ein im wesentlichen H-förmiges Profil aufweist und daß die Felge den Felgentragkörper (1) unter Ausbildung eines Hohlraumes für die Aufnahme der radialen Stützelemente (6) außen umgreift.

2. Laufrad nach Anspruch 1, dadurch gekennzeichnet, daß die radialen Stützelemente (6) bei Umgebungstemperatur den Raum zwischen dem Umfang des Felgentragkörpers (1) und der dem Umfang des Tragkörpers (1) zugewandten Fläche der Felge (2) unvollständig ausfüllen.

3. Laufrad nach Anspruch 1 oder 2, dadurch gekennzeichnet, daß der Felgentragkörper (1) eine Umfangsnut (7) für die Aufnahme der radialen Stützelemente (6) aufweist.

4. Laufrad nach einem der Ansprüche 1,2 oder 3, dadurch gekennzeichnet, daß der Hohlraum zwischen Felgentragkörper (1) und Felge (2) Belüftungsöffnungen aufweist.

5. Laufrad nach einem der Ansprüche 1 bis 4, dadurch gekennzeichnet, daß die elastische Verspannung der Stützelemente (6) so gewählt wird, daß bei maximaler Erwärmung bzw. Wärmedehnung des Felgenprofils eine Stützkraft in radialer Richtung aufrecht erhalten bleibt.

6. Laufrad nach einem der Ansprüche 1 bis 5, dadurch gekennzeichnet, daß die Felge (2) an ihren dem Tragkörper (1) zugewandten Innenseiten der Schenkel des H-Profiles Vorsprünge für den Eingriff in Ringnuten an der Außenseite bzw. den Flanken des Umfanges des Felgentragkörpers aufweisen.

7. Verfahren zur Herstellung eines Laufrades nach einem der Ansprüche 1 bis 6, dadurch gekennzeichnet, daß die Felge (2) auf ihre maximale Betriebstemperatur, insbesondere etwa 150° C, erwärmt wird und unter Zwischenschaltung der elastomeren Stützelemente (6) mit dem Felgentragkörper (1) verbunden wird.

## Claims

1. A running wheel, in particular for a bicycle, comprising a rim and a rim carrying body, wherein the rim is connected with the rim carrying body so as to be secured against rotation in the peripheral direction and supporting elements (6), such as, e.g., elastomer parts, that are resilient in the radial direction are arranged between the rim carrying body (1) and the rim (2), characterized in that the rim (2) is made of metal, in particular aluminium, and designed as an elastically widenable section ring (2) including a detachable locking device, said section ring having a substantially H-shaped section, and that the rim externally encompasses the rim carrying body (1) while forming a hollow space for receiving the radial supporting elements (6).

2. A running wheel according to claim 1, characterized in that the radial supporting elements (6) at ambient temperature incompletely fill the space provided between the periphery of the rim carrying body (1) and the surface of the rim (2) facing the periphery of the carrying body (1).

3. A running wheel according to claim 1 or 2, characterized in that the rim carrying body (1) comprises a peripheral groove (7) for receiving the radial supporting elements (6).

4. A running wheel according to claim 1, 2 or 3, characterized in that the hollow space provided between the rim carrying body (1) and the rim (2) includes ventilation openings.

5. A running wheel according to any one of claims 1 to 4, characterized in that the elastic bias of the supporting elements (6) is chosen such that a supporting force will be maintained in the radial direction at the maximum heating or thermal expansion of the rim section.

6. A running wheel according to any one of claims 1 to 5, characterized in that the rim (2) on its inner sides facing the carrying body (1), of the legs of the H-section comprises projections for engagement in annular grooves provided on the outer sides or flanks of the periphery of the rim carrying body.

7. A process for manufacturing a running wheel according to any one of claims 1 to 6, characterized in that the rim (2) is heated to its maximum operating temperature, in particular about 150°C, and connected with the rim carrying body (1) with the elastomer supporting elements (6) being interposed.

## Revendications

1. Roue, en particulier pour une bicyclette, comprenant une jante et un corps support de jante, la jante étant assemblée au corps support de jante bloquée solidairement dans la direction circonférentielle, et des éléments d'appui (6) élastiques dans la direction radiale comme, par exemple, des éléments en élastomère étant interposés entre le corps support de jante (1) et la jante (2), caractérisée en ce que la jante (2) est faite de métal, en particulier d'aluminium, et est réalisée sous la forme d'un anneau de profilé (2) capable de s'élargir élastiquement, et qui possède un dispositif de fermeture amovible, l'anneau de profilé présentant un profil sensiblement en forme de H, et en ce que la jante entoure extérieurement le corps support de jante (1) en ménageant une cavité destinée à recevoir les éléments d'appui radiaux (6).

2. Roue selon la revendication 1, caractérisée en ce qu'à la température ambiante, les éléments d'appui radiaux (6) remplissent incomplètement l'espace entre la périphérie du corps support de jante (1) et la surface de la jante (2) dirigée vers la périphérie du corps support (1).

3. Roue selon la revendication 1 ou 2, caractérisée en ce que le corps support de jante (1) présente une gorge circonférentielle (7) destinée à recevoir les éléments d'appui radiaux (6).

4. Roue selon l'une des revendications 1, 2 ou 3, caractérisée en ce que la cavité entre le corps support de jante (1) et la jante (2) présente des ouvertures de ventilation.

5. Roue selon l'une des revendications 1 à 4, caractérisée en ce que la contrainte élastique des éléments d'appui (6) est choisie de manière qu'à l'échauffement maximum ou à la dilatation thermique maximum du profilé de la jante, une force d'appui dans la direction radiale reste conservée.

6. Roue selon l'une des revendications 1 à 5, caractérisée en ce que la jante (2) présente, le long de ses côtés intérieurs des branches du profilé en H dirigés vers le corps support (1), des saillies destinées à s'engager dans des gorges annulaires prévues le long du côté extérieur ou des flancs de la périphérie du corps support de jante.

7. Procédé de fabrication d'une roue selon l'une des revendications 1 à 6, caractérisé en ce qu'on chauffe la jante (2) à sa température de service maximale, en particulier, à environ 150°C et qu'on l'assemble au corps support de jante (1) avec interposition des éléments d'appui en élastomère (6).
